# EUROPEAN PATENT SPECIFICATION

(11) **EP 1 239 636 B1**
(45) Date of publication and mention of the grant of the patent: **04.06.2008**
(21) Application number: 01302129.0
(22) Date of filing: 08.03.2001
(51) Int. Cl.: H04L 12/56

(54) **Improved UMTS**
Verbessertes UMTS
UMTS amélioré

(43) Date of publication of application: 11.09.2002
(73) Proprietor: Lucent Technologies Inc., Murray Hill, New Jersey 07974-0636 (US)
(72) Inventor: Chen, Xiaobao, Swindon, Wiltshire SN5 5DQ (GB)
(74) Representative: Sarup, David Alexander

(56) References cited:
- EP-A- 1 071 296
- WO-A-01/15386
- WO-A-02/054795
- ANDREAS WITZEL: "Control Servers in the Core Network" ERICSSON REVIEW, 2000, pages 234-243, XP002174821

## Description

This invention relates to an improved Universal Mobile Telephone System (UMTS), and relates especially to a UMTS having improved Quality of Service (QoS) for Internet Protocol (IP) Packets.

IP Packets can be handled by the UMTS; in the system, Radio Network Controllers (RNCs) and General Packet Radio Service Support Nodes (GSNs) all have IP functions as an IP bearer service; UMTS uses IP mechanisms to transfer bearer series packets by using its own IP packets internally as a carrier, with IP to IP access across the Iu interface.

IP packets are a variable length, and one difficulty in maintaining a required QoS when transmitting IP packets in the UMTS by currently known techniques is that a long packet may cause a buffer to overflow, in which case the packet is dropped. Also, the routing of different IP packets originating in the same call may vary, causing service inconsistency.

Further, IP packet headers are long, typically twenty bytes, so when a packet is short, the header can be much longer than the payload.

In a core network context, Multi-Protocol Label Switching (MPLS) is known as a label-based switching technique based on IP routing and control protocols. In MPLS, at one edge of the MPLS network, an Edge Router encapsulates IP packets into MPLS frames; a label-switched path is set up between Label Switch Routers (LSRs)across the network to a second Edge Router which strips off the MPLS labels. A label can be regarded as a Class of Service Indicator; the route is invariant for the Class, so that different types of application, e.g. voice in real time, email etc., can be handled differently and appropriately, and QoS can be maintained. A routing table is used to link inputs and outputs, so a path can be chosen as shortest, least traffic etc., as appropriate. At each LSR, the labels on each packet are swapped, to indicated the next LSR.

MPLS is particularly targeted for use in the core networks, when it has advantages over conventional IP-based core networks of simplified forwarding and efficient explicit routing, efficient and effective traffic engineering, and it also facilitates QoS routing mechanisms. MPLS is layer 2 service which makes use of layer 2 transmission technologies, such as Point to Point Protocol (PPP), Asynchronous Transmission Mode (ATM), and Ethernet to provide fast connection to the IP layer. MPLS is not however confined to any specific link layer technology and it is extendable to multiple network layer protocols such as IPv4/v6, i.e. MPLS supports "protocol independent switching".

It is an object of the invention to provide a UMTS which incorporates MPLS for IP packet transmission to mobile systems.

International (P.C.T.) Patent Publication WO 02/054795, which is citable on the question of novelty but not inventive step, and the paper by ANDREAS WITZEL entitled "Control Servers in the Core Network" ERICSSON REVIEW, 2000, pages 234-243, XP002174821 are referred to as technological background. It is known from WO 02/054795 to provide a Universal Mobile Telephone System, UMTS, comprising a Core Network operating Multi-Protocol Label Switching, the core network including a plurality of Label Switching Routers, at least one Gateway General Packet Support Node, and at least one Serving General Packet radio Support Node, SGSN, the UMTS also comprising a plurality of Radio Network Controller associated with said SGSN, and a plurality of Node Bs associated with each said controller, all Node Bs and Controllers operating User Data Protocol/Internet Protocol; in which a first Multi-Protocol Label Switching Edge Node is located in the GGSN.

The present invention is characterized over the disclosure of WO 02/054795 in that a second MPLS Edge Node is located in each Radio Network Controller or in each Node B.

Preferably a second Multi-Protocol Label Switching Edge Node is located in at least one Serving GPRS Support Node, or in each Radio Network Controller, or in each Node B.

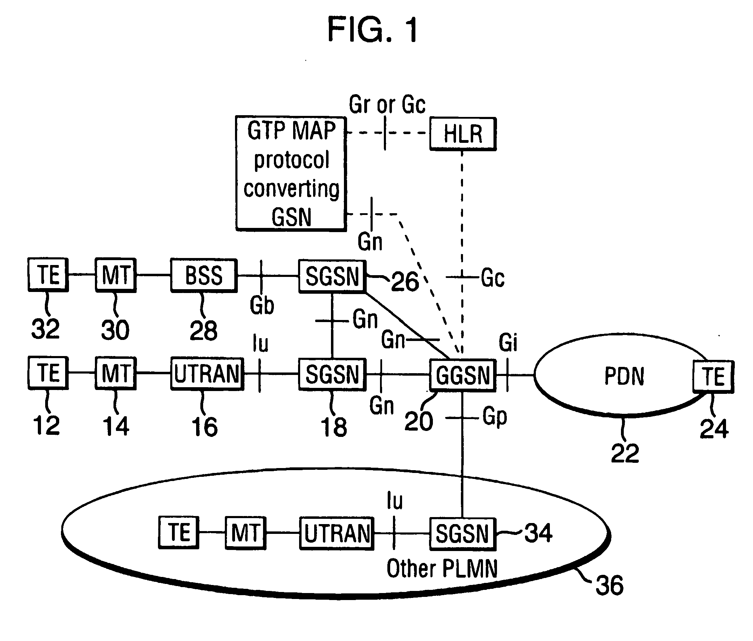

The prior art GPRS logical architecture is illustrated in Figure 1.

The invention will be described by way of example only with reference to Figures 2 to 9 in which:-
Figure 2 illustrates an alternative proposal with the MPLS Edge Node located in a GGSN and a SGSN;
Figure 3 shows the protocol stacks in the User Plane;
Figure 4 illustrates secondary PDP context activation procedures;
Figure 5 illustrates a first embodiment with MPLS Edge Nodes located in the RNCs;
Figures 6 and 7 show the protocol stacks in the User Plane for variations of the second embodiment;
Figure 8 illustrates a second embodiment with MPLS Edge Nodes located in the Node Bs;
Figure 9 shows the protocol stack;
Figure 10 illustrates schematically the control plane of an all-IP UTRAN interface; and
Figure 11 shows the Iub interface protocol structure.

In the prior art GPRS architecture of Figure 1, a terminal equipment 12 is connected through a mobile terminal 14 to the UMTS Terrestrial Radio Access Network (UTRAN) 16 which comprises at least one Radio Network Controller (RNC) and at least one Node B associated with each RNC (not illustrated). The UTRAN connects across a Iu interface to a Serving GPRS Support Node (SGSN) 18, connected to a Gateway GPRS Support Node (GGSN) 20 across a Gn interface. The GGSN 20 connects across a Gi interface to Packet Data Network (PDN) 22, such as Internet, which has terminal equipment 24, and across a further Gn interface to a further SGSN 26 which supports a Base Station Controller 28. BSC 28 connects to a mobile terminal 30 and terminal equipment 32. GGSN 20 also connects to a SGSN 34 in another public land mobile network 36 across a Gp interface.

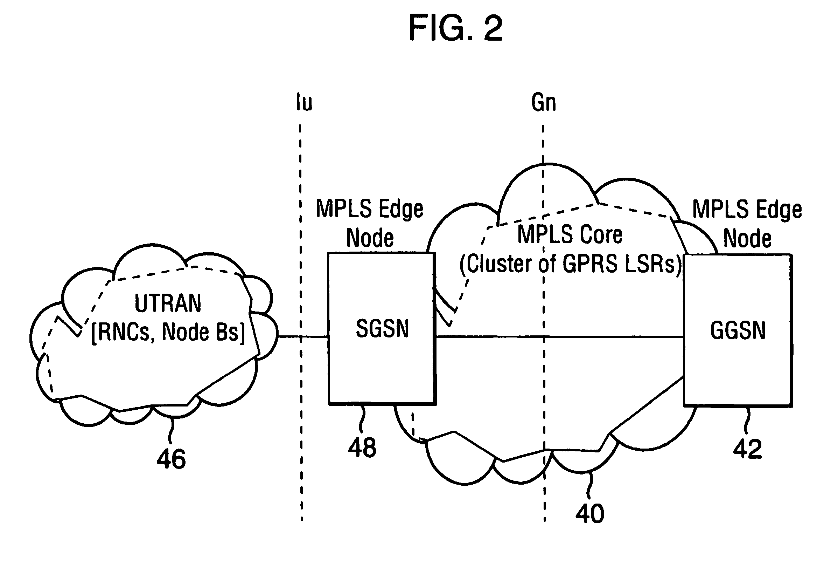

In Figure 2, in the GPRS according to the alternative proposal, the core network 20 is a cluster of GPRS Local Switching Routers each operating in MPLS. A first MPLS Edge Node is located in a GGSN 42 at one side of the core network. On the opposite side of the core network a UTRAN 46 communicates with the core network across a Iu interface via a SGSN 48 arranged to operate as a second MPLS Edge Node.

In this system, the introduction of MPLS affects primarily the Gn/Gi/Gp interfaces.

An IP tunnel is formed between the SGSN 48 and the GGSN 42, using GPRS Tunneling Protocol-User (GTP-U). The user IP packets are formed into encapsulated or tunneled Protocol Data Units (TPDUs) and are tunneled between the end points. On the Gn interface between the SGSN and the GGSN, GTP-U is encapsulated in MPLS frames. The packet forwarding deploys the label-switching arrangement of MPLS while the Iu interface uses conventional IP as the transport bearer and the UTRAN 46 uses ATM transport links.

The SGSN and GGSN include the functionality of both the ingress node and the egress node, i.e. packets can be tunneled in either direction.

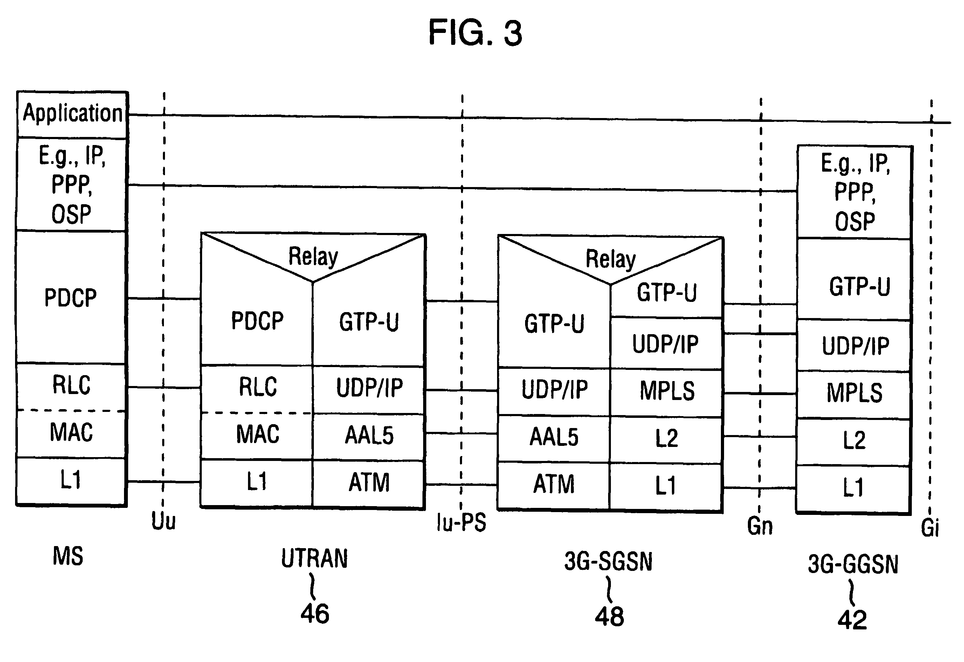

The protocol stack, slightly modified from the conventional stack, is shown in Figure 3. The GGSN 42, SGSN 48 and the RNC in UTRAN 46 all have their conventional IP routing functions, formerly the conventional IP bearer service. In this first inventive embodiment, MPLS is introduced into the GGSN 42 and the SGSN 48 immediately below UDP/IP as illustrated.

The process will now be described in detail.

### Step I: MPSL Initiation:

At MPLS initiation, the edge nodes, the SGSN 48 and the GGSN 42 as well as other interconnection network elements/routers that serve as the GPRS LSRs in the core 40 may use standard routing protocol (BGP, OSPF) or GPRS/UMTS specific route selecting protocol to determine the route between the ingress node and the edge node. Routes between any two network entities are associated with short and fixed-length labels that are distributed through the network.. Labels at each LSR are stored in a Label Information Base (LIB) and are periodically refreshed and distributed using the Label Distribution Protocol (LDP) or RSVP. To represent an explicit route, labels are concatenated together in the form of a label stack; they are associated with a Forwarding Equivalence Class (FEC) that associates a stream with a set of common characteristics. Ingress nodes and egress nodes use FEC to provide the mapping of "packet type" to streams.

### Step II: GTP-U Filtering at the Ingress Node:

The GTP-U/UDP/IP enters the entry point of an LSP though the MPLS core via an Ingress Node. At entry each GTP-U/UDP/IP is associated with a FEC that provides the instruction set on how to forward the packet based on the destination and possibly other header information. This operation is called **Filtering at the Ingress Node**. If a FEC is found, the appropriate label ( or label stack for explicit routing ) is shimmed into the IP header and the data link packet headers. If a FEC is not present, it is routed using the existing transport bearer IP. This facilitates interoperability with conventional routing and provides a method for forwarding packets while MPLS is initializing.

### Step III: GPRS LSR Hopping:

At each intermediate hop (GPRS LSR), the label is used to look up the table (the LIB) as index to decide the next label with which the MPSL packet is forwarded to next hop. If an entry is found, the label is replaced and the packet is forwarded to the next hop.; if an entry is not found, the packet is forwarded using the conventional routing in reference to the information of the layer-3 header (i.e. the IP header carrying GTP-U/UDP ). If the packet has an explicit route (that is a label stack), the label of the current LSR is popped off and the packet is sent on its way without doing a table lookup.

### Step IV: GTP-U Filtering at the Egress Node

When the MPLS packet reaches the egress node, or the packet gets to the end of its label stack, or when an entry is not found in the LIB, the packet is ready to exit the GPRS MPLS Core. The label is stripped off and the GTP-U/UDP/IP packet is either routed to the next hop using Layer-3 (IP) information or sent to its final destination. When the packet reaches the egress node, the label must be stripped off so that the GPT-U/UDP/IP or the MAC Frame/IP can be routed directly using conventional layer-3 routing (IP) or delivered to the end node.

### 1) Mapping between GPRS/UMTS QoS Classes and GPRS/UMTS MPLS FEC's

Four QoS Classes (Conversational, Streaming, Interactive and Background) are defined for GPRS/UMTS. Each QoS Class has a set of sub-classes. During the MPLS initiation, an FEC is allocated and associated with a specific explicit route that is selected according to the QoS (sub-) Class to be supported. The forwarding behavior experienced by each MPLS packet along the selected associated with the selected explicit path is guaranteed within the required performance limit (such as the bandwidth, delay, jitter, packet, etc.). The following sets of FEC's are defined:
i) Delay Sensitive FEC (DS-FEC): those FECs' that are associated with the forwarding behaviors that provides delay within certain bounds but no guarantee on the packet loss rate.
ii) Delay In-Sensitive FEC (DIS-FEC): those FEC's that are associated with the forwarding behaviors that provides best effort like service, i.e. no guarantee of the delay bound but with guaranteed packet loss rate.
iii) Guaranteed Delivery FEC (GD-FEC): those FEC's that are associated with the forwarding behavior that guarantees the delay bound and packet loss.
iv) Best-effort FEC (BE-FEC): those FEC's that are associated with the forwarding behavior that provide the best effort like service, i.e. no guarantee on the delay or the packet loss rate.

Each set of FEC's may includes a number of sub-FECs that are associated with a specific forwarding behavior on a finer granularity. The exact number of the sub-FEC is implementation dependent. The selected mapping between the FEC's and the GPRS/UMTS QoS Classes is dependent on the operators.

### 2) QoS Support in GPRS/UMTS MPLS:

When a GTP-U/UDP/IP enters an ingress node, it may trigger the set-up of the allocation of label and the set-up of the appropriate LSP (traffic driven) or follow the LSP that has been set up before hand (the control driven). A FEC must be identified and allocated based on the QoS requirement that are associated with each GTP-U/UDP/IP packet by using the GTP-U filtering mechanism based on the mapping between the GPRS/UMTS QoS Classes and the four sets of FEC's. As a result, a corresponding label is allocated and assigned to the incoming packet. During the packet forwarding at each LSR along the selected path, each LSR uses the label as the index to decide the corresponding FEC and the subsequently the required forwarding behavior that is associated with the FEC. Finally the LSR at which the MPLS packets arrives activates the required resources for the appropriate forwarding treatment of the packet.

### 1) The Secondary PDP Context and the MPLS FEC's/LSP's

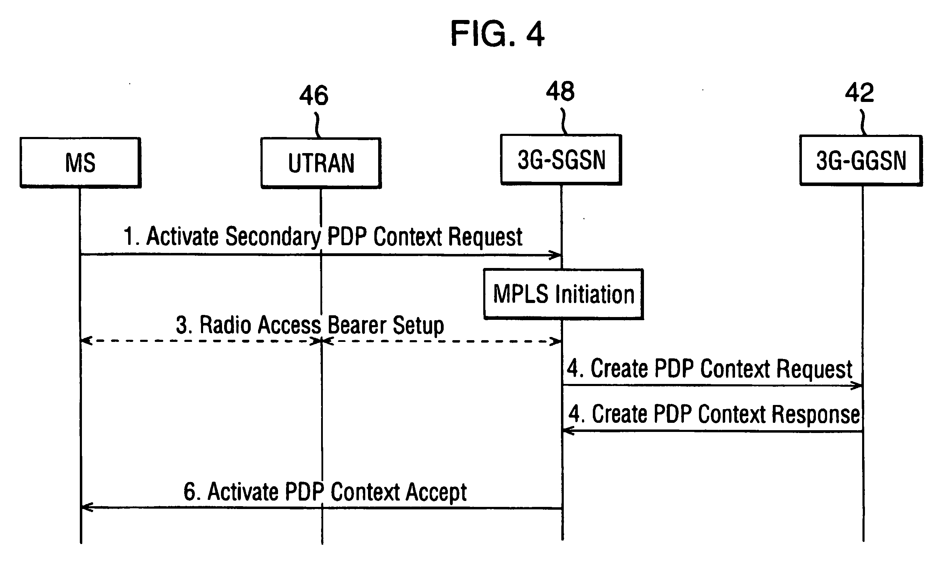

A secondary PDP context is activated upon the request of transmitting a data flow between the MT and the GGSN. The creation and activation of a secondary PDP context triggers the allocation of a MPLS label and the identification of an appropriate FEC's. Data flows with different secondary PDP Contexts belonging to different users but requiring the similar/same QoS classes may be grouped into the same stream that bears the same FEC. An LSP is selected for delivering the stream across the GPRS/UMTS MPLS network. A schematic description about the procedure of setting up a secondary PDP Context in relation to the setting- up of LSP is shown Figure 4.

During the MPLS initiation, there may well be an existing LSP that is associated with FEC with an appropriate mapping relationship with the QoS class the secondary PDP context requests. Then instead of setting up a different LSP, the new flow corresponding to the secondary PDP Context can be grouped into the stream that bears the FEC mapped to the QoS class required by the secondary PDP Context to be set up.

### 3) MPLS Support on Gp/Gi

The similar mechanisms apply to the Gp/Gi interfaces when the GTP-U/UDP/IP is carried in the MPLS packet.

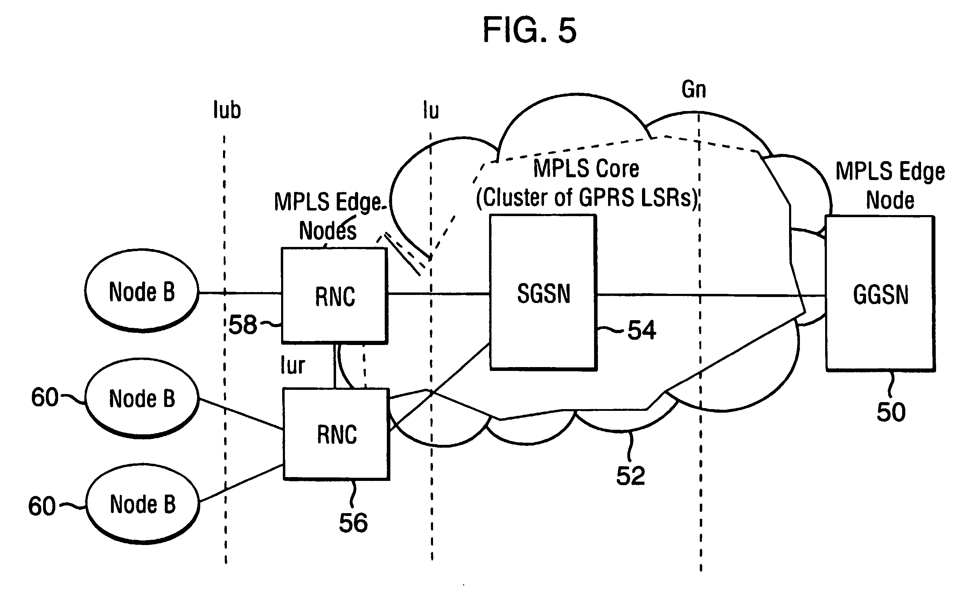

In the first embodiment, the MPLS is terminated at the RNCs as shown in Figure 5. A GGSN 50 on one side of the Core 52 acts as a first MPLS Edge Node, while the SGSN 54 is not an MPLS Edge Node but acts as a Core LSR. The RNCs 56, 58 are now the second MPLS Edge Nodes. Each RNC supports at least one Node B 60. The Iu interface now also supports MPLS.

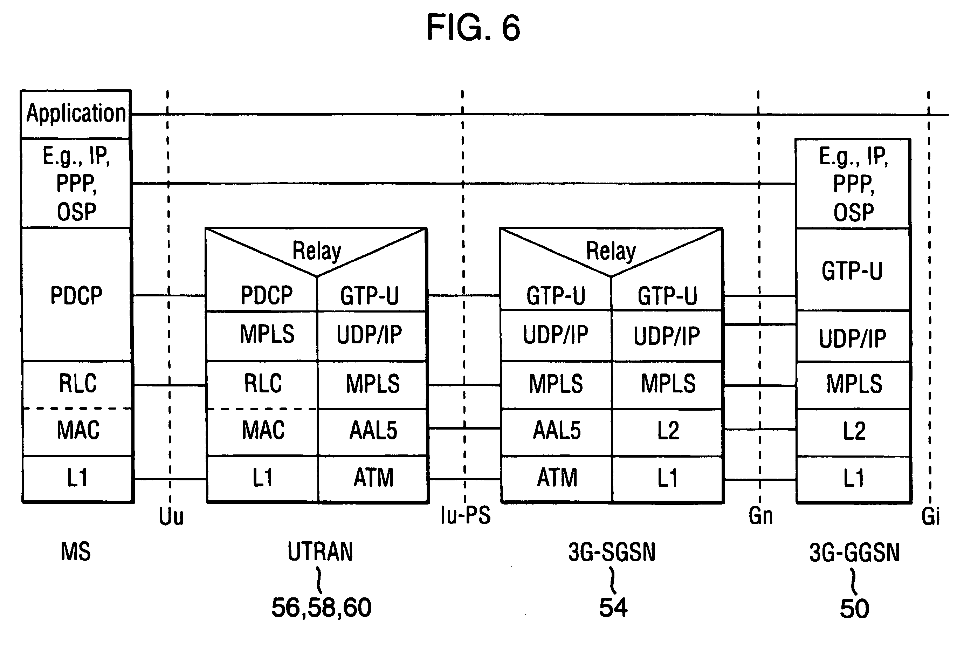

The MPLS domain includes a Core Network and the RNCs as well as intermediate nodes such as SGSN 54 and label switching is used for forwarding the packets of data traffic in the GGSN 50, SGSN 54 and RNCs 56, 58. The underlying transport links can be e.g. ATM or Frame Relay, as shown in the protocol stack of Figure 6. MPLS lies immediately below UDP/IP in each of the GGSN 50, SGSN 54 and RNCs 56, 58 in the UTRAN 56, 58, 60.

### 1) MPLS Support on Iu-ps and Gn

GTP-U Tunnels are used to carry encapsulated T-PDUs between a given pair of GTP-U Tunnel endpoints which are the RNC 56 or 58 in the UTRAN and the SGSN 54 for the interface Iu-ps and the SGSN 54 and GGSN 50 for interface Gn.

Three different approaches have been identified and are discussed as follows.

### Approach I:

On both the Iu-ps and the Gn interfaces, GTP-U/UDP/IP is encapsulated in MPLS frames as shown in Figure 6.

### Step I: MPLS Initiation:

At MPLS initiation, the edge nodes, the RNC and as well as other interconnection network elements/routers that serve as the GPRS LSRs in the core use standard routing protocol (BGP, OSPF) or GPRS/UMTS specific route selecting protocol to determine the route between the ingress node and the edge node. Routes between any two network entities are associated with short and fixed-length labels that are distributed through the network.. Labels at each LSR are stored in a Label Information Base (LIB) and are periodically refreshed and distributed using the Label Distribution Protocol (LDP) or RSVP. To represent an explicit route, labels are concatenated together in the form of a label stack; they are associated with a Forwarding Equivalence Class (FEC) that associates a stream with a set of common characteristics. Ingress nodes and egress nodes use FEC to provide the mapping of "packet type" to streams.

### Step II: GTP-U Filtering at the Ingress Node:

The GTP-U/UDP/IP enters the entry point of an LSP though the MPLS core via an Ingress Node. At entry each GTP-U/UDP/IP is associated with a FEC that provides the instruction set on how to forward the packet based on the destination and possibly other header information. This operation is called **Filtering at the Ingress Node**. If a FEC is found, the appropriate label (or label stack for explicit routing ) is shimmed into the GTP-U/UDP/IP header and the data link packet headers. If a FEC is not present, it is routed using the existing transport bearer (i.e. IP). This facilitates interoperability with conventional routing and provides a method for forwarding packets while MPLS is initialising.

### Step III: GPRS LSR Hopping:

At each intermediate hop (GPRS LSR), the label is used to look up the table (the LIB) as index to decide the next label with which the MPSL packet is forwarded to next hop. If an entry is found, the label is replaced and the packet is forwarded to the next hop.; if an entry is not found, the packet is forwarded using the conventional routing in reference to the information of the layer-3 header (i.e. the IP header of GTP-U/UDP/IP ). If the packet has an explicit route (that is a label stack), the label of the current LSR is popped off and the packet is sent on its way without doing a table lookup.

### Step IV: GTP-U Filtering at the Egress Node

When the MPLS packet reaches the egress node, or the packet gets to the end of its label stack, or when an entry is not found in the LIB, the packet is ready to exit the GPRS MPLS Core. The label is stripped off and the GTP-U/UDP/IP is either routed to the next hop using Layer-3 (IP) information or sent to its final destination. When the packet reaches the egress node, the label must be stripped off so that the GPT-U/UDP/IP can be routed directly using conventional layer-3 routing (IP) or delivered to the end node.

### Approach II:

On both the Iu-ps and the Gn interfaces, GTP-U/UDP is encapsulated in MPLS frames as shown in Figure 6.

### Step I: MPSL Initiation:

At MPLS initiation, the edge nodes, the RNC and as well as other interconnection network elements/routers that serve as the GPRS LSRs in the core use GPRS/UMTS specific route selecting protocol to determine the route between the ingress node and the edge node. Routes between any two network entities are associated with short and fixed-length labels that are distributed through the network.. Labels at each LSR are stored in a Label Information Base (LIB) and are periodically refreshed and distributed using the Label Distribution Protocol (LDP) or RSVP running as the IP BS level signaling protocol. To represent an explicit route, labels are concatenated together in the form of a label stack; they are associated with a Forwarding Equivalence Class (FEC) that associates a stream with a set of common characteristics. Ingress nodes and egress nodes use FEC to provide the mapping of "packet type" to streams.

### Step II: GTP-U Filtering at the Ingress Node:

The GTP-U/UDP enters the entry point of an LSP though the MPLS core via an Ingress Node. At entry each GTP-U/UDP is associated with a FEC that provides the instruction set on how to forward the packet based on the destination and possibly other header information. This operation is called **Filtering at the Ingress Node**. If a FEC is found, the appropriate label (or label stack for explicit routing) is shimmed into the GTP-U/UDP header and the data link packet headers. If a FEC is not present, it is routed using the existing GPRS/UMTS specific route selection protocols. Please note that due to the absence of the IP routing capability, the feature of interoperability with conventional MPLS and forwarding packets while MPLS is initializing is lost in comparison with **Approach I**.

### Step III: GPRS LSR Hopping and inter-working with IP routing:

At each intermediate hop (GPRS LSR), the label is used to look up the table (the LIB) as index to decide the next label with which the MPSL packet is forwarded to next hop. If an entry is found, the label is replaced and the packet is forwarded to the next hop.; if an entry is not found, the packet is forwarded using the conventional routing in reference to the information of the layer-3 header (i.e. the IP header of GTP-U/UDP/IP ). If the packet has an explicit route (that is a label stack), the label of the current LSR is popped off and the packet is sent on its way without doing a table lookup.

When the next hop in the GPRS/UMTS MPLS Core is MPSL in-capable such as a router with conventional IP routing capability, the current hop will have to provide the egress functionality that maps and swaps the switching label with the appropriate IP header (please note that operation is more complicated than just stripping off the label as in the egress node in Approach I). Subsequently the GTP-U/UDP/IP will be routed using the conventional IP routing mechanism until the hop where MPLS is provided. The hop needs to provide the functionality of the ingress node that maps the IP header to the MPLS header with the switching label. The IP header is then stripped off and the GTP-U/MPLS is forwarded to the next LSR until it reaches the edge node of the GPRS/UMS MPLS core.

### Step IV: GTP-U Filtering at the Egress Node

When the MPLS packet reaches the egress node, or the packet gets to the end of its label stack, or when an entry is not found in the LIB, the packet is ready to exit the GPRS MPLS Core. The label is stripped off and the GTP-U/UDP is packaged into an IP packet either to be routed to the next hop using Layer-3 (IP) information or sent to its final destination.

### Approach III:

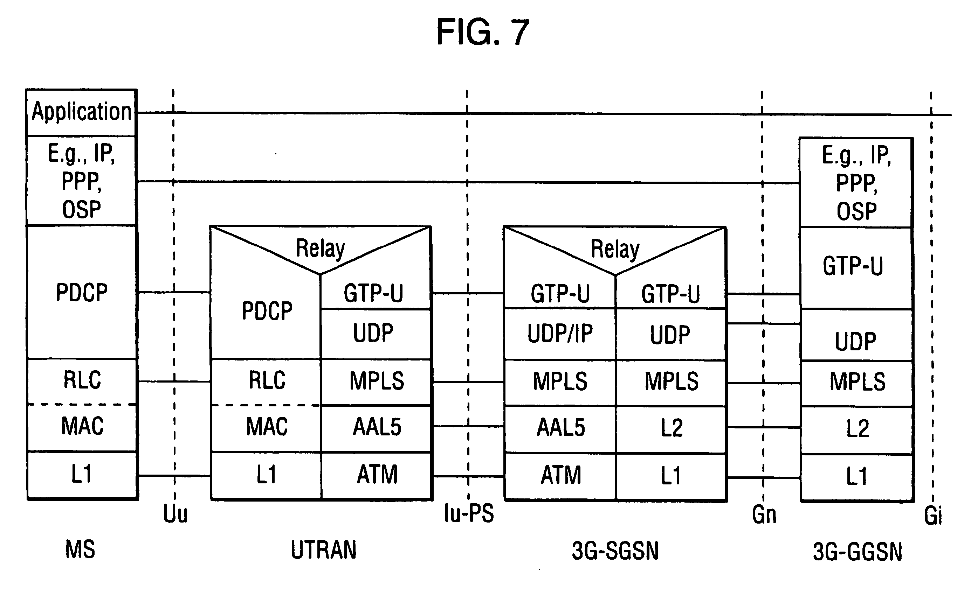

On both the Iu-ps and the Gn interfaces, GTP-U is encapsulated directly in MPLS frames as shown in Figure 7.

### Step I: MPSL Initiation:

At MPLS initiation, the edge nodes, the RNC and as well as other interconnection network elements/routers that serve as the GPRS LSRs in the core use GPRS/UMTS specific route selecting protocol to determine the route between the ingress node and the edge node. Routes between any two network entities are associated with short and fixed-length labels that are distributed through the network. Labels at each LSR are stored in a Label Information Base (LIB) and are periodically refreshed and distributed using the Label Distribution Protocol (LDP) or RSVP running as the IP BS level signaling protocol. To represent an explicit route, labels are concatenated together in the form of a label stack; they are associated with a Forwarding Equivalence Class (FEC) that associates a stream with a set of common characteristics. Ingress nodes and egress nodes use FEC to provide the mapping of "packet type" to streams.

### Step II: GTP-U Filtering at the Ingress Node:

The GTP-U/UDP enters the entry point of an LSP though the MPLS core via an Ingress Node. At entry each GTP-U/UDP is associated with a FEC that provides the instruction set on how to forward the packet based on the destination and possibly other header information. This operation is called **Filtering at the Ingress Node**. If a FEC is found, the appropriate label (or label stack for explicit routing) is shimmed into the GTP-U/UDP header and the data link packet headers. If a FEC is not present, it is routed using the existing GPRS/UMTS specific route selection protocols. Please note that due to the absence of the IP routing capability, the feature of interoperability with conventional MPLS and forwarding packets while MPLS is initializing is lost in comparison with **Approach I.**

### Step III: GPRS LSR Hopping and inter-working with IP routing:

At each intermediate hop (GPRS LSR), the label is used to look up the table (the LIB) as index to decide the next label with which the MPSL packet is forwarded to next hop. If an entry is found, the label is replaced and the packet is forwarded to the next hop.; if an entry is not found, the packet is forwarded using the conventional routing in reference to the information of the layer-3 header (i.e. the IP header of GTP-U/UDP/IP ). If the packet has an explicit route (that is a label stack), the label of the current LSR is popped off and the packet is sent on its way without doing a table lookup.

When the next hop in the GPRS/UMTS MPLS Core is MPSL in-capable such as a router with conventional IP routing capability, the current hop will have to provide the egress functionality that maps and swaps the switching label with the appropriate IP header (please note that operation is more complicated than just stripping off the label as in the egress node in Approach I). Subsequently the GTP-U/UDP/IP will be routed using the conventional IP routing mechanism until the hop where MPLS is provided. The hop needs to provide the functionality of the ingress node that maps the IP header to the MPLS header with the switching label. The IP header is then stripped off and the GTP-U/MPLS is forwarded to the next LSR until it reaches the edge node of the GPRS/UMS MPLS core.

### Step IV: GTP-U Filtering at the Egress Node

When the MPLS packet reaches the egress node, or the packet gets to the end of its label stack, or when an entry is not found in the LIB, the packet is ready to exit the GPRS MPLS Core. The label is stripped off and the GTP-U/UDP is packaged into an IP packet either to be routed to the next hop using Layer-3 (IP) information or sent to its final destination.

In comparison with Approach II, the approach III bears fewer overheads in processing each GTP-U over MPLS packet across the Iu and the Gn interfaces. But

### 1) QoS Support on MPLS based Iu and the Gn;

Operations similar to those specified in Scenario I are deployed which include the operations of GTP-U filtering, mapping between GPRS/UMTS QoS Classes and FEC's as well as the grouping and aggregation of data flows into MPLS streams.

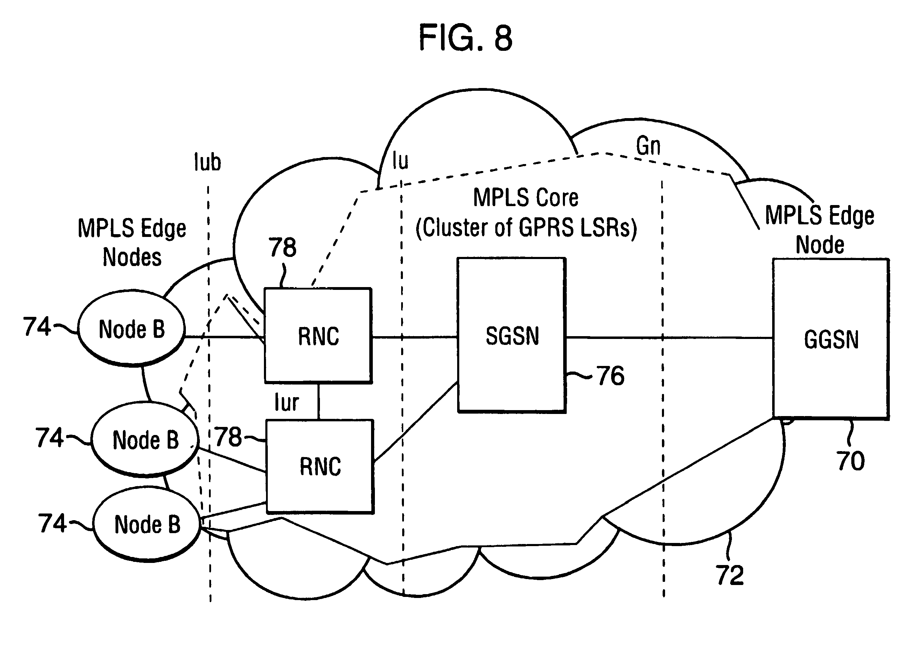

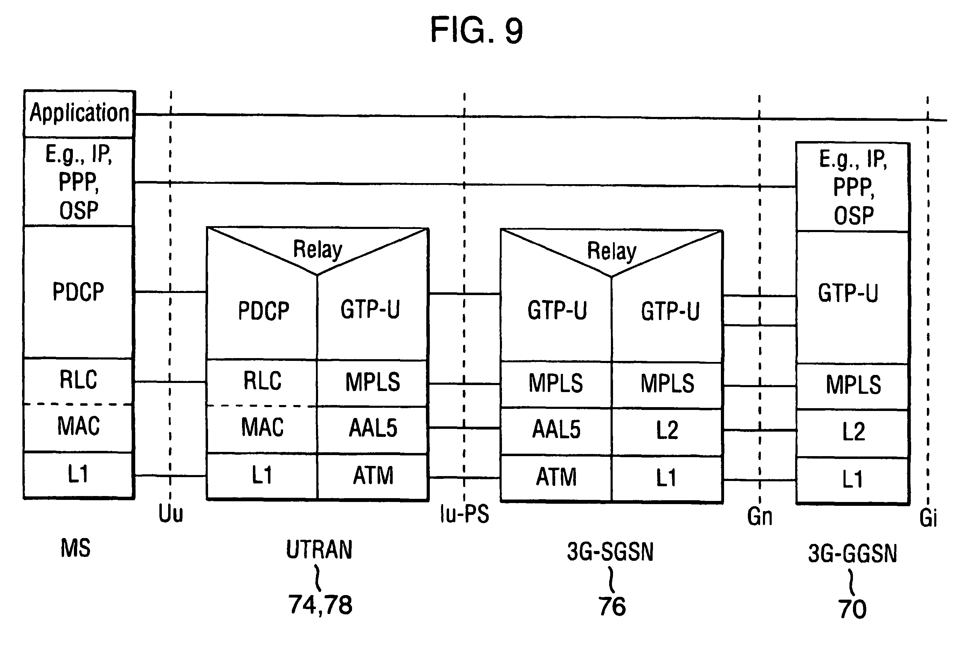

In the second embodiment shown in Figure 8, MPLS Edge Nodes are located in GGSN 70 on one side of a core network 72, and at Node Bs 74 on the other side of the core network. All data traffic through the core uses label switching, e.g in the SGSN 76 and RNCs 78, i.e., these components serve as core LSRs. The Gn/Gp/Gi, Iub, Iur and Iu interfaces now all need to be expanded, in accordance with the principles explained in detail above. The protocol stack is shown in Figure 9.

Turning now to the protocol arrangements, the general protocol structure in the conventional UTRAN consists of two main layers, the Radio Network Layer and the Transport "Network Layer which is based on ATM. All UTRAN related issues are visible only in the Radio Network Layer. The Transport Network Layer represents standard transport technology which is selected to be used for UTRAN without any UTRAN-specific requirements. Both have their specific User Plane and Control Plane. The Data Bearers in the Transport Network User Plane are directly controlled by the Transport Network Control Plane during real time operation, but the control actions required for setting up the Signaling Bearers (s) for Application Protocol (i.e. Radio Access Network Application Protocol (ie RANAP), Radio Network Subsystem Application Protocol (RNSAP) or Node B Application Part NBAP used for setting up bearers i.e. the Radio Access Bearer or Radio Link are considered O&M actions.

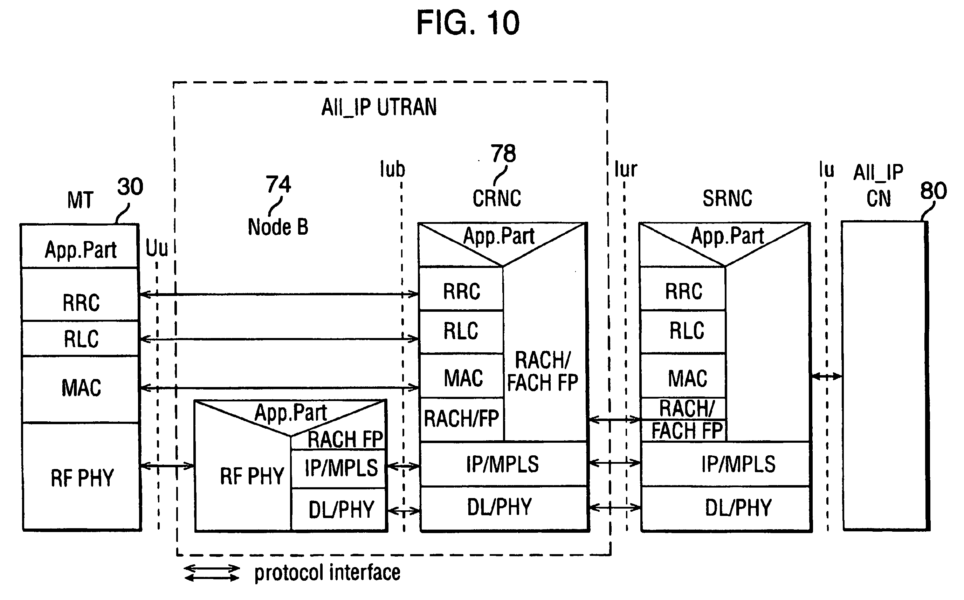

In an all-IP UTRAN, the Transport Network Layer is now based on IP, as are the transport links for the Iu and Iub interfaces. This is illustrated in Figure 10; conventional features including the applications part App.Part; Radio Resource Control; Radio Link Control; Medium Access Control; and Radio Frequency Physical layer are shown in the MT 30, Node B724, CRNC 78 and SRNC 79. The IP/MPLS layer is located above the DL/PHY layer in all three stacks.

Considering now the inventive IP Iub interface between Node B 74 and CRNC 78; the information transferred over the interface includes:-
I the Radio Application Related Signaling
II Data Streams
   i the Iub/Iur DCH data stream
   ii the Iub RACH data stream
   iii the Iub FDD CPCH data stream
   iv the Iub FACH data stream
   v the Iub TDD USCH data stream
   vi the Iub PCH data stream

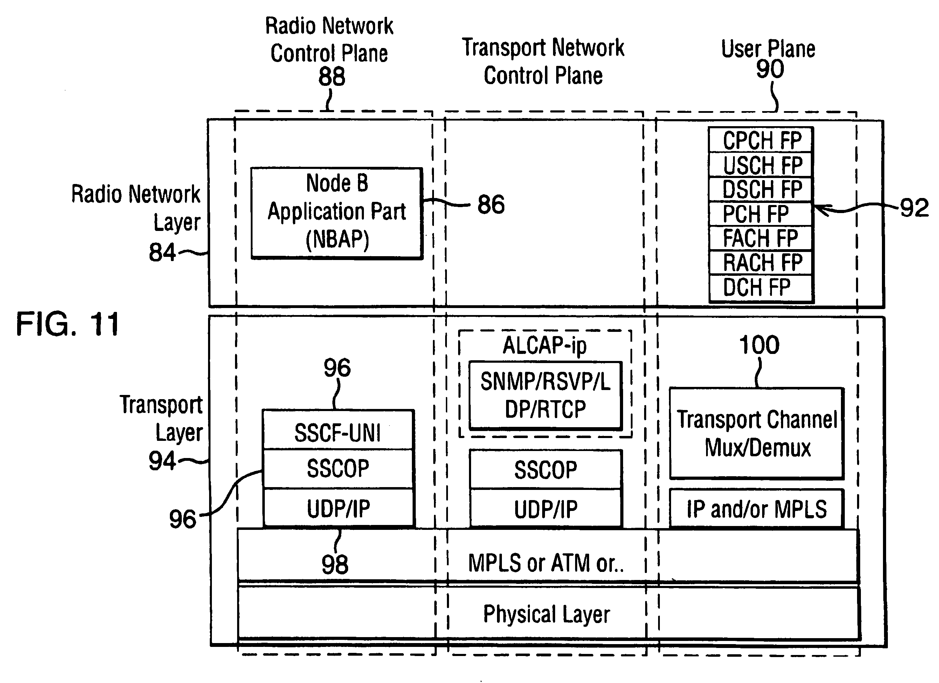

Figure 11 shows the IP Iub interface protocol structure. There are two functional layers. The first is the Radio Network Layer 84 which defines procedures 86 related to the operation of Node B 74. The Radio Network Layer 84 consists of a radio network control plane 88 and a radio network user plane 90; the user plane 90 comprises the F P of each of the transport channels shown at 92.

The second functional layer is the transport layer 94 which defines procedures for establishing physical connections between Node B 74 and the CRNC786 as indicated at 96. The transport layers include the UDP/IP protocol at 98.

There is one dedicated AAL2 connection for each RACH, for each FACH, and for each CPCH, where AAL2 is a type of Asynchronous Transport Mode (ATM) Adaptation Scheme which allows multiplexing traffic over the same ATM Virtual connection.

The transport channel mux/demux 100 is also shown in the user plane 90.

The three embodiments described above illustrate that the inventive implementation of MPLS technology in GPRS/UMTS facilitates the following advantageous features:-

### (1) QoS provision:

Being the essential requirement for multimedia services in GPRS/UMTS, QoS provision can be achieved by making use of QoS routing and explicit routing of MPLS. In comparison with QoS provisioning on IP-based transport bearer, MPLS-based QoS provisioning can be made more efficient and an effective. In fact, lots of IP QoS control protocols can be integrated into MPLS for a fully integrated QoS platform with other QoS supporting technologies such as ATM.

### (2) Flexibility of in selecting different network protocols and data links:

MPLS is independent to both underlying data links and the network layer protocols and thus provide an layer of isolation to the possibly different network protocols and data links in different operational domains. This will ease or eliminate the concern on the time and cost of providing GPRS/UMTS services over different networking and transport infrastructures (e.g. IPv4/v6, AppleTalk, IPX, ATM, Frame Relay, SDH, Fibre, PPP, etc.).

### (3) Effective Flow Control and Traffic Engineering:

Due to the ease of using explicit routing and fast label switching, effective flow control, congestion control among the different network elements (Node-B, RNC, SGSN and GGSN) can be achieved by means of proper load balancing and effective traffic engineering.

### (4) Policy Enabled Service Provision

The policy control can be easily enforced in MPLS based network. Different varieties of policies can be applied during the set-up of LSP (Labe1 Switched Path) and specific policies can be associated with each label that is assigned to a stream whose forwarding behavior is governed by the corresponding policies.

### (5) Smooth migration to new technologies and maximum compatibility with existing wireless networks.

Due to the independence of the use of MPLS from the network protocols and the data links, an MPLS based GPRS/UMTS bearer service architecture will allow easy introduction of new and various routing and networking technologies and data links and thus facilitate a smooth migration from current GPRS/UMTS networks to future ones without the need of replying on the specific network protocols and data links used in existing and future GPRS/UMTS networks. This network and data links independence feature of MPLS will also allows for easy and maximum compatibility and integration with exiting serving GPRS/UMTS networks.

## Claims

1. A Universal Mobile Telephone System, UMTS, comprising a Core Network (40) operating Multi-Protocol Label Switching, the core network including a plurality of Label Switching Routers; at least one Gateway General Packet Support Node (GGSN) 42, and at least one Serving General Packet radio Support Node, SGSN, (48); the UMTS also comprising a plurality of Radio Network Controllers (56, 58) associated with said SGSN; and a plurality of Node Bs (60) associated with each said controller, all Node Bs and Controllers operating User Data Protocol/Internet Protocol; in which a first Multi-Protocol Label Switching Edge Node is located in the GGSN (42), **characterized in that** a second MPLS Edge Node is located in each Radio Network Controller (56, 58) or in each Node B (74).

2. A UMTS according to Claim 1 in which a second MPLS Edge Node is located in at least one SGSN (48).

3. A UMTS according to Claim 1 in which the second MPLS Edge Node is located in each Radio Network Controller (56, 58), and in which the at least one SGSN (54) is arranged as a MPLS Label Switching Router.

4. A UMTS according to Claim 1 in which the second MPLS Edge Node is located in each Node B (74), and in which the at least one SGSN (54) and each Radio Network Controller (56, 58) is arranged as a MPLS Label Switching Router.

5. A UMTS according to any preceding claim in which in the protocol stacks of the GGSN, and in the protocol stacks of the SGSN or the RNCs or the Node Bs when acting as a MPLS Edge Node, the MPLS protocol is located in a protocol layer immediately below the User Data Protocol/Internet Protocol layer.

6. A UMTS according to any preceding claim in which each MPLS Edge Node is arranged either to encapsulate IP packets into MPLS frames or to strip MPLS frames from IP packets.

7. A UMTS according to any preceding claim arranged so that routes between any two network entities are associated with labels distributed throughout the network in Label Information Base stores.

8. A UMTS according to Claim 7 in which each Label Switching Router is arranged to look up a Label Information Base store to determine the appropriate route to a next network entity.

## Patentansprüche

1. Universelles Mobilfunk-Telekommunikationssystem UMTS (Universal Mobile Telephone System) mit einem Multiprotokoll-Etikettaustausch (Multi-Protocol Label Switching) betreibenden Kernnetz (40) mit einer Mehrzahl von Etikettaustausch-Routern (Label Switching Routers), mindestens einem GGSN-Knoten (Gateway General Packet Support Node) (42) und mindestens einem SGSN-Knoten (Serving General Packet radio Support Node) (48); wobei das UMTS auch eine Mehrzahl von im SGSN zugeordneten Funknetzsteuerungen (Radio Network Controllers) (56, 58) und eine Mehrzahl von jeder dieser Steuerungen zugeordneten Knoten Bs (60) umfaßt, wobei alle Knoten B und Steuerungen UDP/IP (User Data Protocol/Internet Protocol) betreiben, wobei sich ein erster Multiprotokoll-Etikettaustausch-Randknoten (Multi Protocol Label Switching Edge Node) im GGSN (42) befindet, **dadurch gekennzeichnet, daß** sich ein zweiter MPLS-Randknoten in jeder Funknetzsteuerung (56, 58) oder in jedem Knoten B (74) befindet.

2. UMTS nach Anspruch 1, in dem sich ein zweiter MPLS-Randknoten in mindestens einem SGSN (48) befindet.

3. UMTS nach Anspruch 1, in dem sich der zweite MPLS-Randknoten in jeder Funknetzsteuerung (56, 58) befindet und in dem der mindestens eine SGSN (54) als MPLS-Etikettaustausch-Router angeordnet ist.

4. UMTS nach Anspruch 1, in dem sich der zweite MPLS-Randknoten in jedem Knoten B (74) befindet und in dem der mindestens eine SGSN (54) und jede Funknetzsteuerung (56, 58) als MPLS-Etikettaustausch-Router angeordnet ist.

5. UMTS nach einem beliebigen vorhergehenden Anspruch, in dem sich in den Protokollstapeln des GGSN und in den Protokollstapeln des SGSN oder der RNC oder des Knotens B, wenn er als MPLS-Randknoten wirkt, das MPLS-Protokoll in einer unmittelbar unter der UDP/IP-Schicht (User Data Protocol/Internet Protocol) befindlichen Protokollschicht befindet.

6. UMTS nach einem beliebigen vorhergehenden Anspruch, in dem jeder MPLS-Randknoten entweder zum Verkapseln von IP-Paketen in MPLS-Rahmen oder zum Ausblenden von MPLS-Rahmen aus IP-Paketen angeordnet ist.

7. UMTS nach einem beliebigen vorhergehenden Anspruch, so angeordnet, daß Leitwege zwischen beliebigen zwei Netzinstanzen Etiketten zugeordnet sind, die im gesamten Netz in Etikettinformationsbasisspeichern verteilt sind.

8. UMTS nach Anspruch 7, in dem jeder Etikettaustausch-Router zum Nachschlagen in einem Etikettinformationsbasis-Speicher zum Bestimmen des jeweiligen Leitwegs zu einer nächsten Netzinstanz angeordnet ist.

## Revendications

1. Système téléphonique mobile universel, UMTS, comprenant un Réseau central (40) exploitant la Commutation de Labels de Protocoles multiples, le réseau central comportant une pluralité de Routeurs de Commutation de Labels, au moins un Noeud de Support de Paquets général Passerelle (GGSN) 42, et au moins un Noeud de Support radio de Paquets général de Desserte, SGSN, (48) ; l'UMTS comprenant également une pluralité de Contrôleurs de Réseau Radio (56, 58) associés audit SGSN, et une pluralité de Noeuds B (60) associés à chaque dit contrôleur, tous les Noeuds B et Contrôleurs exploitant un Protocole De Données d'Utilisateur/Protocole Internet ; dans lequel un premier Noeud de Bordure de Commutation de Labels de Protocoles multiples est situé dans le GGSN (42), **caractérisé en ce qu'**un deuxième Noeud de Bordure MPLS est situé dans chaque Contrôleur de Réseau Radio (56, 58) ou dans chaque Noeud B (74).

2. UMTS selon la revendication 1, dans lequel un second Noeud de Bordure MPLS est situé dans au moins un SGSN (48).

3. UMTS selon la revendication 1, dans lequel le second Noeud de Bordure MPLS est situé dans chaque Contrôleur de Réseau Radio (56, 58), et dans lequel l'au moins un SGSN (54) est agencé comme Routeur de Commutation de Labels MPLS.

4. UMTS selon la revendication 1, dans lequel le second Noeud de Bordure MPLS est situé dans chaque Noeud B (74), et dans lequel l'au moins un SGSN (54) et chaque Contrôleur de Réseau Radio (56, 58) est agencé comme Routeur de Commutation de Labels MPLS.

5. UMTS selon l'une quelconque des revendications précédentes, dans lequel dans les piles de protocole du GGSN, et dans les piles de protocole du SGSN ou des RNC ou des Noeuds B fonctionnant en tant que Noeud de Bordure MPLS, le protocole MPLS est situé dans une couche de protocole située immédiatement en dessous de la couche de Protocole de Données d'Utilisateur/Protocole Internet.

6. UMTS selon l'une quelconque des revendications précédentes, dans lequel chaque Noeud de Bordure MPLS est agencé soit pour encapsuler les paquets IP en trames MPLS, soit pour extraire les trames MPLS des paquets IP.

7. UMTS selon l'une quelconque des revendications précédentes, agencé pour que les routes entre n'importe quelles deux entités de réseau soient associées à des Labels distribués dans tout le réseau dans des mémoires de Base d'Informations de Labels.

8. UMTS selon la revendication 7, dans lequel chaque Routeur de Commutation de Labels est agencé pour consulter une mémoire de Base d'Informations de Labels afin de déterminer la route appropriée jusqu'à une entité de réseau suivante.
